# FASCICULE DE BREVET EUROPEEN

(11) **EP 0 819 234 B1**
(45) Date de publication et mention de la délivrance du brevet: **27.12.2000**
(21) Numéro de dépôt: 96912078.1
(22) Date de dépôt: 05.04.1996
(51) Int. Cl.: F23N 5/00, F23N 5/18, F23B 1/14

(54) **CHAUDIERE A COUCHE POSEE ET PROCEDE DE CONDUITE DE CHAUDIERE AVEC REDUCTION DES EMISSIONS D'OXYDES D'AZOTE**
KESSEL MIT ROSTFEUERUNG UND STEUERUNGSVERFAHREN ZUR REDUZIERUNG DER STICKOXID-EMISSION
DEPOSITED-BED BOILER AND METHOD FOR OPERATING SAME WITH REDUCED NITROGEN OXIDE EMISSIONS

(30) Priorité: 05.04.1995 FR 9504052
(43) Date de publication de la demande: 21.01.1998
(73) Titulaire: Societe de Chauffe, de Combustibles, de Reparations et D'Appareillages Mecaniques, SOCCRAM, 92100 Clichy (FR)
(72) Inventeur: BOULET, Charles, F-78530 Buc (FR)
(74) Mandataire: Arnaud, Jean Pierre Alfred
(86) Numéro de dépôt international: FR9600526
(87) Numéro de publication internationale: WO9631737

(56) Documents cités:
- DE-A- 2 261 069
- DE-A- 3 703 568
- FR-A- 2 581 164
- GB-A- 2 190 515
- POWER, vol. 127, no. 6, Juin 1983, NEW YORK US, pages 97-99, XP000573221 MALONEY: "RECYCLE FLUE GAS TO CUT EMISSIONS, IMPROVE BOILER PERFORMANCE"
- PATENT ABSTRACTS OF JAPAN vol. 008, no. 012 (M-269), 19 Janvier 1984 & JP,A,58 175708 (OSAKA GAS KK), 15 Octobre 1983,

## Description

L'invention concerne un procédé de conduite de chaudière et une chaudière qui permettent une réduction de la teneur en oxydes d'azote des fumées.

Plus précisément, l'invention concerne la conduite d'une chaudière à couche posée d'un combustible solide et à grille mobile, destiné à la réduction de la teneur en NOₓ des fumées émises, et une chaudière permettant la mise en oeuvre d'un tel procédé.

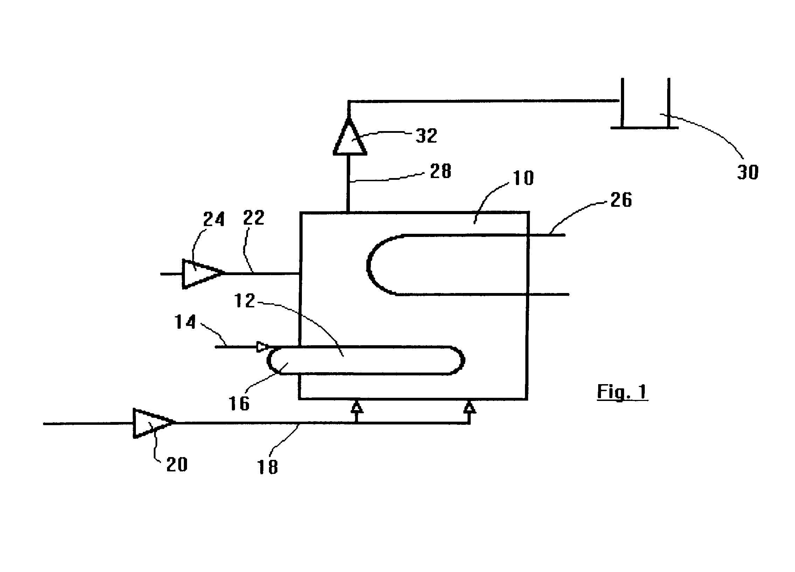

On considère d'abord une chaudière classique à couche posée d'un combustible solide, considéré comme étant du charbon, et à grille mobile pour comprendre les problèmes posés par cette conduite. La figure 1 représente une installation à chaudière du type à couche posée d'un combustible solide. La chaudière comporte un corps 10 à la partie inférieure duquel est disposée une grille mobile 12. Le combustible solide 14, de préférence du charbon simplement concassé, est disposé à la surface de la grille afin qu'il forme un lit dont l'épaisseur varie en fonction de la puissance demandée à la chaudière. Un dispositif 16 assure l'entraînement de la grille mobile. Un conduit 18 introduit sous la grille mobile un courant d'air primaire provenant d'un ventilateur 20.

De l'air secondaire 22 est éventuellement soufflé dans le corps de chaudière au-dessus de la grille mobile, sous la commande d'un ventilateur 24.

L'eau du circuit de chauffage circule dans des tubes 26. Les fumées formées par la combustion sont évacuées par un conduit 28 pour être transmises à une cheminée 30, sous la commande d'un ventilateur de tirage 32.

On considère maintenant la conduite de la chaudière qu'on vient de décrire. En fonction de la température extérieure, on détermine une température de consigne. Cette température de consigne est d'autant plus basse que la température de l'air extérieur est élevée. Par exemple, elle peut varier entre 130 et 170 °C lorsque la température extérieure varie entre plus de 10 °C et moins de -10 °C. Une fois établie cette température de consigne, la puissance demandée est déterminée en fonction de la différence entre les températures de l'eau à l'entrée et la température de consigne de la chaudière. Cette puissance demandée permet alors la détermination de la quantité de charbon qui doit être brûlée, compte tenu de la qualité du charbon utilisé. Cette quantité de charbon est obtenue par formation d'un lit ayant une certaine épaisseur sur la grille mobile 12. Dans un exemple, le lit peut être réglé à dix épaisseurs différentes, par exemple variant par pas de 1 cm entre 5 et 15 cm. L'obtention du débit voulu de charbon avec un lit d'épaisseur déterminée est obtenue par modulation de la vitesse de la grille par commande du dispositif 16 d'entraînement de la grille.

La puissance fournie (déterminée en fonction de la différence entre les températures de l'eau à la sortie et à l'entrée de la chaudière) permet aussi la détermination d'une quantité d'air secondaire soufflée par la conduite 22. En pratique, l'air secondaire est introduit par un certain nombre de buses, et l'obtention d'une bonne turbulence qui favorise la combustion dans l'espace interne du corps 10 de chaudière nécessite une certaine vitesse de l'air secondaire à la sortie des buses. En conséquence, le nombre de buses utilisées pour le soufflage d'air secondaire est sélectionné en proportion de la puissance fournie. Par exemple, l'appareil peut comprendre huit buses disposées symétriquement, et le nombre de buses utilisées est égal à 0, 2, 4, 6 ou 8, suivant la puissance fournie. On ne pourrait pas obtenir un tel résultat avec un simple registre destiné à régler le débit global d'air secondaire transmis par un nombre constant de buses, car la vitesse de l'air secondaire serait souvent insuffisante pour assurer un bon brassage.

La puissance fournie permet aussi la détermination d'un "excès stoechiométrique" d'oxygène. Cet excès stoechiométrique est d'autant plus grand que l'épaisseur du lit du combustible solide est faible. En effet, plus le lit a une grande épaisseur et plus l'air permet une bonne combustion dans le lit. Cet excès stoechiométrique varie par exemple entre 8 % pour la puissance maximale de la chaudière et 15 % pour sa puissance minimale.

Enfin, la quantité d'air primaire soufflé par la conduite 18 sous la grille mobile 12 est déterminée. Cette quantité d'air primaire est obtenue par mesure de la température de l'air primaire et de son débit dans la conduite 18, et par commande du ventilateur 20 afin qu'il permette la régulation du débit du courant d'air primaire.

Le procédé qu'on vient de décrire est couramment utilisé pour la conduite des chaudières à couche posée de combustible solide à grille mobile. Il est parfois mis en oeuvre manuellement. Cependant, il s'écoule un temps de l'ordre d'une demi-heure entre le moment où le charbon est placé sur le lit de combustible à l'entrée de la grille mobile et le moment où les cendres formées par ce charbon sont évacuées à l'autre extrémité de cette grille ; l'ensemble de l'installation présente donc une certaine inertie, si bien que la conduite manuelle d'une telle installation nécessite une grande expérience. Cependant, même lorsque le personnel de conduite est très expérimenté, il arrive, en régime transitoire, c'est-à-dire lorsque la puissance demandée varie, que la conduite de la chaudière s'écarte de façon importante des conditions nominales. Cet écart par rapport aux conditions nominales provoque non seulement une baisse du rendement de la chaudière, due à une mauvaise combustion, mais aussi une augmentation des émissions polluantes dans les fumées.

Pour ces raisons, on a été amené à automatiser de plus en plus le fonctionnement de ces chaudières, c'est-à-dire à utiliser une unité centrale de traitement qui coordonne l'ensemble des opérations par utilisation des signaux de capteurs (mesure des températures d'entrée et de sortie d'eau, mesure de l'excès stoechiométrique d'oxygène, mesure de la température des fumées, mesure de la température de l'air primaire) et par commande d'actionneurs (commande du dispositif de formation du lit de combustible solide, commande de la vitesse du dispositif d'entraînement de la grille mobile, commande du ventilateur et des buses d'injection d'air secondaire et du ventilateur de tirage, commande du ventilateur du courant d'air primaire).

Même dans les conditions optimales de conduite automatisée, les fumées contiennent encore des quantités de matières polluantes qui peuvent être excessives. Il est souhaitable de réduire autant que possible les émissions de ces matières polluantes.

Les oxydes d'azote NOₓ constituent des matières polluantes qui posent un problème particulier. Selon les pays, les concentrations maximales, actuelles ou futures, des oxydes d'azote des fumées des chaudières doivent ou devront être inférieures à une valeur comprise entre 250 et 650 mg/m³ et plus. (Lorsqu'on indique des valeurs de volumes de gaz dans le présent mémoire, il s'agit de valeurs considérées dans les conditions normales, c'est-à-dire à une température de 273 K et une pression de 1 013 kPa. Pour cette raison, il est nécessaire de mesurer les températures des gaz afin d'en déterminer le volume ou le débit dans les conditions normales). Il est donc fréquent que la teneur des fumées en oxydes d'azote soit excessive.

L'invention a donc pour objet la réduction de la teneur en oxydes d'azote des fumées des chaudières. Plus précisément, elle concerne un procédé de conduite de chaudière et une chaudière qui permettent une réduction de la teneur en oxydes d'azote des fumées, par recyclage d'une partie des fumées dans le courant d'air primaire.

On connaît déjà le recyclage d'une partie des fumées d'un appareil de combustion dans le courant d'air primaire. Par exemple, on a déjà réalisé des chaudières à lit fluidisé dans lesquelles une couche de sable est soulevée et rendue fluide par un courant ascendant d'air et de gaz de combustion recyclés. La couche de sable ainsi fluidisée est utilisée pour le support du combustible. Le maintien à l'état fluidisé du lit nécessite un débit élevé. C'est la raison pour laquelle une partie des gaz de combustion est recyclée avec l'air primaire pour donner un débit suffisant. Dans le cas de ces chaudières à lit fluidisé, la teneur en oxydes d'azote des fumées évacuées ne pose pas de problème et elle est nettement inférieure aux limites fixées par les règlements. Cette technique ne concerne donc pas le problème de l'invention et s'applique à un domaine tout à fait différente de celui de l'invention puisqu'elle ne convient pas aux combustibles solides en couches posées des chaudières à grille mobile.

Le recyclage des fumées abaisse la température de combustion. Il est connu que cet abaissement a pour effet de diminuer les rejets de NOₓ.

L'article "Recycle flue gas to cut emissions, improve boiler performance" de Maloney, paru dans "Power", vol. 127, n° 6, juin 1983, pages 97-99 a aussi suggéré une réduction de l'excès d'air par mélange de fumées et d'air de combustion dans les chaudières du type à couche posée de combustible solide, et a indiqué que la teneur en oxydes d'azote pouvait être réduite. La raison pour laquelle le recyclage d'une partie des fumées peut réduire la teneur en oxydes NOₓ est que, aux températures supérieures à 600 °C environ, le dioxyde d'azote NO₂ se décompose en formant de l'oxyde nitreux NO. Ce dernier, aux températures supérieures à 560 °C environ, se décompose notablement en azote et en oxygène. En conséquence, le passage des fumées dans le lit du combustible à haute température provoque une certaine décomposition des oxydes d'azote.

Cependant, cet article envisage l'introduction des fumées à la fois dans le courant d'air primaire et le courant d'air secondaire, et toujours en aval du ventilateur qui fait circuler l'air. Il ne suggère pas que la formation des oxydes d'azote puisse varier avec le taux de recyclage des fumées, et il n'indique aucunement les avantages de la détermination d'un taux optimal de recyclage.

L'invention concerne un procédé de conduite de chaudière et une chaudière mettant en oeuvre ce procédé qui permettent la détermination et l'utilisation des conditions nécessaires, selon l'invention, pour une réduction effective des oxydes d'azote des fumées. Ces conditions concernent essentiellement la régulation d'un courant prélevé de fumées qui est introduit dans le courant d'air primaire, et l'introduction de ce courant prélevé. La régulation porte sur le "taux optimal de recyclage" des fumées qui doit avoir une valeur déterminée. Ce "taux optimal de recyclage" est défini dans la suite en référence à la description détaillée de l'invention.

Plus précisément, l'invention concerne, dans un premier aspect, un procédé de conduite d'une chaudière à couche posée d'un combustible solide et à grille mobile, destiné à la réduction de la teneur en oxydes d'azote NOₓ des fumées émises, du type qui comprend la détermination de la puissance que doit fournir la chaudière et, en fonction de cette puissance à fournir, la détermination de la quantité de combustible solide à brûler, et éventuellement la détermination d'un débit d'introduction d'air secondaire, la mesure de l'excès stoechiométrique d'oxygène dans les fumées, le prélèvement d'un courant de fumées à la sortie de la chaudière, et la régulation du débit d'un courant d'air primaire en fonction de la puissance à fournir et de l'excès stoechiométrique d'oxygène mesuré. Selon l'invention, le procédé comporte aussi la détermination d'un taux optimal de recyclage, et le mélange du courant de fumées prélevé à l'air primaire est réalisé de manière que le mélange forme un courant d'air primaire contenant une quantité de fumées correspondant au taux optimal de recyclage.

Il est très avantageux que le mélange du courant de fumées et de l'air primaire soit réalisé en amont d'un dispositif de circulation qui introduit le courant d'air primaire dans la chaudière. De cette manière, le mélange du courant de fumées et de l'air primaire présente une excellente homogénéité favorable à la combustion.

De préférence, la détermination du taux optimal de recyclage comprend la conduite de la chaudière avec différents taux de recyclage pour la détermination de la valeur donnant la plus faible teneur en NOₓ. Cependant, dans un autre mode de réalisation, la détermination de ce taux optimal de recyclage est effectuée par lecture d'un taux optimal de recyclage dans des tables en fonction du type de la chaudière utilisée et de la nature du combustible solide.

Dans un perfectionnement, la détermination du taux optimal de recyclage dépend aussi de la puissance fournie par la chaudière.

De préférence, le prélèvement des fumées comprend la détermination de la quantité prélevée par mesure de la température et du débit du courant de fumées prélevé, et la régulation de la quantité prélevée en fonction du taux optimal de recyclage.

Dans un second aspect, l'invention concerne une chaudière à couche posée de combustible solide et à grille mobile, du type qui comprend un corps de chaudière, une grille mobile destinée à déplacer un lit de combustible solide entre une entrée de combustible solide et une sortie de cendres, un premier dispositif de circulation destiné à introduire un courant d'air primaire sous la grille mobile, un dispositif d'introduction d'air secondaire, un premier dispositif de régulation destiné à faire varier la quantité du courant d'air primaire en fonction de la puissance demandée à la chaudière et de l'excès stoechiométrique d'oxygène dans les fumées, un dispositif de prélèvement d'un courant de fumées, et un dispositif de mélange du courant de fumées au courant d'air primaire. Selon l'invention, elle comprend en outre un second dispositif de régulation destiné à faire varier la quantité du courant de fumées en fonction de la quantité du courant d'air primaire afin qu'il donne un taux optimal déterminé de recyclage des fumées dans le courant d'air primaire, et le courant de fumées destiné à être mélangé au courant d'air primaire est introduit en amont du premier dispositif de circulation.

De préférence, le second dispositif de régulation détermine la quantité de fumées par mesure de la température et du débit des fumées.

Il est avantageux que le dispositif de mélange soit constitué par le premier dispositif de circulation.

De préférence, le dispositif de prélèvement comprend un second dispositif de circulation commandé par le second dispositif de régulation.

La chaudière comprend aussi avantageusement un dispositif de calcul, du type destiné à recevoir, à partir de capteurs, des données représentatives de la température de l'eau à l'entrée de la chaudière, de la température de l'eau à la sortie de la chaudière et de la température extérieure et à calculer la puissance que doit fournir la chaudière et à commander la hauteur du lit de combustible solide, la vitesse de la grille et la quantité d'air secondaire, le dispositif de calcul étant aussi destiné à recevoir des données représentatives de la température et du débit des fumées prélevées et à réguler la quantité de fumées recyclées par le second dispositif de circulation et la quantité d'air primaire déplacée par le premier dispositif de circulation.

D'autres caractéristiques et avantages de l'invention ressortiront mieux de la description qui suit d'un mode de réalisation avantageux de chaudière selon l'invention, faite en référence aux dessins annexés sur lesquels, la figure 1 ayant déjà été décrite :

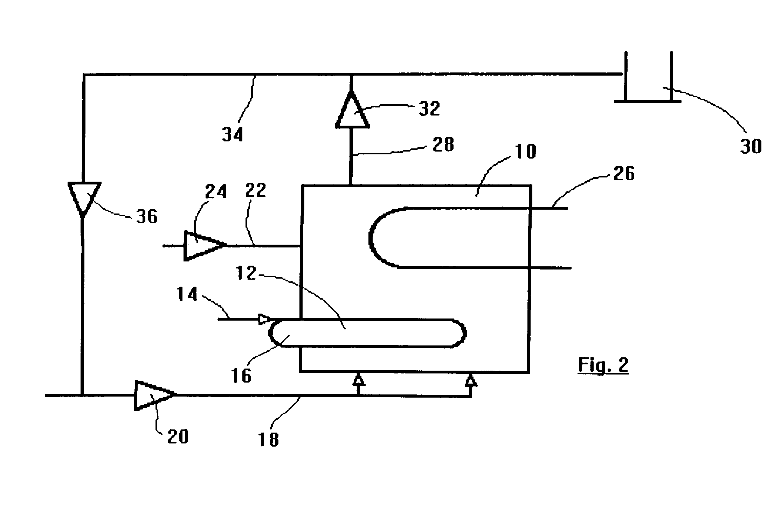

- la figure 2 est un schéma, analogue à la figure 1, d'une installation de chaudière selon l'invention.

La figure 2 représente une installation de chaudière selon l'invention. Elle comprend d'abord tous les éléments déjà décrits en référence à la figure 1. La conduite de cette chaudière est réalisée de la manière analogue à celle de la chaudière de la figure 1. Cependant, on note la présence d'une conduite supplémentaire 34 qui relie la conduite 28 de fumées, à la sortie de la chaudière, à la conduite 18 en amont du ventilateur 20 du courant d'air primaire. Cette conduite 34 comporte un ventilateur 36.

En outre, la conduite 34 comporte un capteur de température et un capteur de débit (non représentés) qui permettent de déterminer un débit corrigé d'un courant de fumées recyclées vers la conduite 18 du courant d'air primaire.

Des essais ont été réalisés pour la mise au point de l'invention en fonction du "taux de recyclage" des fumées. Dans le présent mémoire, ce "taux de recyclage" désigne le rapport du débit de fumées recyclées vers la conduite 18 et du débit du courant d'air primaire dans la conduite 18. Dans ces essais, le taux de recyclage a varié d'une valeur nulle à une valeur de l'ordre de 50 %. Ils ont permis de tirer deux conclusions.

La première conclusion est que la teneur en oxydes d'azote, obtenue avec un combustible déterminé, diminue puis augmente, c'est-à-dire présente un minimum, lorsque le taux de recyclage augmente de 0 à 50 %. Il existe donc une valeur optimale du taux de recyclage.

La seconde conclusion est que le taux optimal de recyclage donnant la teneur minimale en oxydes d'azote varie peu avec la variation de la puissance, pour une chaudière particulière et un même combustible, si bien qu'un seul taux optimal de recyclage convient en général dans toute la plage de puissance de la chaudière.

Les résultats de ces essais ont permis d'établir les conditions de mise en oeuvre de l'invention. On a noté précédemment que la conduite de la chaudière nécessitait la régulation du débit d'air primaire. L'utilisation d'un taux optimal de recyclage déterminé nécessite donc aussi la régulation du courant de fumées prélevé qui est ensuite mélangé à l'air primaire pour la formation du courant d'air primaire soufflé sous la grille mobile. Cette régulation du courant de fumées prélevé est obtenue par commande du dispositif de circulation du courant de fumées (ventilateur 36) en fonction d'une part de la quantité d'air primaire nécessaire et d'autre part de la température des fumées, afin que le débit du courant prélevé puisse être déterminé et proportionné à la quantité d'air primaire.

Etant donné que la réduction de la teneur en oxydes d'azote est maximale pour un taux optimal de recyclage déterminé, il est important que ce taux optimal de recyclage soit le même lors du passage du courant primaire dans le lit de combustible. Il est donc nécessaire que le courant de fumées recyclées et l'air primaire soient bien mélangés pour la formation du courant d'air primaire.

A cet effet, dans le mode de réalisation représenté sur la figure 2, la conduite 34 de recyclage des fumées débouche en amont du dispositif de circulation (ventilateur 20) qui transmet le courant d'air primaire. Cependant, il est aussi possible que la conduite 34 soit raccordée en aval du ventilateur 20. Dans ce cas, il est préférable que l'air primaire et le courant recyclé soient bien mélangés dans un dispositif particulier, par exemple une chambre de mélange placée à l'entrée de la chaudière.

Bien qu'on ait représenté la présence d'un second dispositif de circulation 36 sous forme d'un ventilateur, il est possible, lors de l'utilisation du ventilateur 32 de tirage, et lorsque la perte de charge est suffisante entre ce ventilateur 32 et la cheminée 30, de transmettre directement le courant de fumées prélevé par la conduite 34 sans ventilateur 36. Dans ce cas, la régulation du courant de fumées est réalisé par une vanne réglable placée dans la conduite 34 et dont l'ouverture est commandée par l'unité centrale de traitement. Celle-ci commande alors un actionneur de la vanne réglable à la place de l'actionneur du ventilateur 36.

### Exemple

On considère maintenant un exemple de mise en oeuvre de l'invention dans une chaudière du type représenté sur la figure 2.

La chaudière est une chaudière à charbon à grille mobile ayant une puissance de 17,5 MW, destinée à fournir de l'eau surchauffée à 150 °C environ à un réseau de chauffage urbain. La teneur en oxygène des fumées est mesurée avec un analyseur à oxyde de zirconium placé en sortie de la chambre de combustion et en amont du ventilateur de tirage. Le débit d'air primaire est mesuré par un capteur piézométrique monté à l'aspiration du ventilateur de soufflage et un transmetteur de pression différentielle à membrane. Le débit est corrigé en fonction de la température. Le débit des fumées recyclées est mesuré par un pseudo-venturi installé au refoulement du ventilateur de circulation des fumées.

Les actionneurs principaux sont le moteur d'avance de la grille qui permet la variation de la vitesse de celle-ci, les actionneurs qui font varier l'inclinaison des pales d'un dispositif placé en amont du ventilateur 20 du courant primaire, et le moteur d'entraînement du ventilateur 36.

Dans un premier essai dans lequel la chaudière fonctionnait à 86 % de sa puissance, la teneur en oxydes d'azote est tombée de 240 à 201 mg/m³ ; dans un autre essai à 50 % de sa puissance, la teneur en oxydes d'azote est tombée de 308 à 259 mg/m³. Le taux optimal de recyclage donnant les valeurs minimales était voisin de 15 à 20 %.

Il est bien entendu que l'invention n'a été décrite et représentée qu'à titre d'exemple préférentiel et qu'on pourra apporter toute équivalence technique dans ses éléments constitutifs sans pour autant sortir de son cadre.

## Revendications

1. Procédé de conduite d'une chaudière à couche posée d'un combustible solide et à grille mobile, destiné à la réduction de la teneur en oxydes d'azote NOₓ des fumées émises, du type qui comprend
- la détermination de la puissance que doit fournir la chaudière et, en fonction de cette puissance à fournir, la détermination de la quantité de combustible solide à brûler, et éventuellement la détermination d'un débit d'introduction d'air secondaire,
- la mesure de l'excès stoechiométrique d'oxygène dans les fumées,
- le prélèvement d'un courant de fumées à la sortie de la chaudière, et
- la régulation du débit d'un courant d'air primaire en fonction de la puissance à fournir et de l'excès stoechiométrique d'oxygène mesuré,
caractérisé en ce qu'il comprend
- la détermination d'un taux optimal de recyclage, et en ce que
- le mélange du courant de fumées prélevé à l'air primaire est réalisé de manière que le mélange forme un courant d'air primaire contenant une quantité de fumées correspondant au taux optimal de recyclage.

2. Procédé selon la revendication 1, caractérisé en ce que la détermination du taux optimal de recyclage comprend la conduite de la chaudière avec différents taux de recyclage pour la détermination de la valeur donnant la plus faible teneur en NOₓ.

3. Procédé selon la revendications 1, caractérisé en ce que la détermination du taux optimal de recyclage est effectuée par lecture d'un taux optimal de recyclage dans des tables en fonction du type de la chaudière utilisée et de la nature du combustible solide.

4. Procédé selon l'une quelconque des revendications 1 à 3, caractérisé en ce que le prélèvement de fumées comprend la détermination de la quantité prélevée par mesure de la température et du débit du courant de fumées prélevé, et la régulation de la quantité prélevée en fonction du taux optimal de recyclage.

5. Procédé selon l'une quelconque des revendications 1 à 4, caractérisé en ce que le mélange du courant de fumées et de l'air primaire est réalisé en amont d'un dispositif de circulation (20) qui introduit le courant d'air primaire dans la chaudière.

6. Chaudière à couche posée de combustible solide et à grille mobile, du type qui comprend
- un corps (10) de chaudière,
- une grille mobile (12) destinée à déplacer un lit de combustible solide entre une entrée de combustible solide et une sortie de cendres,
- un premier dispositif de circulation (20) destiné à introduire un courant d'air primaire sous la grille mobile,
- un dispositif (22, 24) d'introduction d'air secondaire, et
- un premier dispositif de régulation destiné à faire varier la quantité du courant d'air primaire en fonction de la puissance demandée à la chaudière et de l'excès stoechiométrique d'oxygène dans les fumées,
- un dispositif (34, 36) de prélèvement d'un courant de fumées, et
- un dispositif (20) de mélange du courant de fumées introduit dans le courant d'air primaire,
caractérisée en ce qu'elle comprend
- un second dispositif de régulation destiné à faire varier la quantité du courant de fumées en fonction de la quantité du courant d'air primaire afin qu'il donne un taux optimal déterminé de recyclage des fumées dans le courant d'air primaire, et en ce que
- le courant de fumées destiné à être mélangé au courant d'air primaire est introduit en amont du premier dispositif de circulation (20).

7. Chaudière selon la revendication 6, caractérisée en ce que le second dispositif de régulation détermine la quantité de fumées par mesure de la température et du débit des fumées.

8. Chaudière selon l'une des revendications 6 et 7, caractérisée en ce que le dispositif de mélange est constitué par le premier dispositif de circulation (20).

9. Chaudière selon l'une quelconque des revendications 6 à 8, caractérisée en ce que le dispositif de prélèvement comprend un second dispositif de circulation (36) commandé par le second dispositif de régulation.

10. Chaudière selon l'une quelconque des revendications 6 à 9, caractérisée en ce qu'elle comprend en outre un dispositif de calcul, du type destiné à recevoir de capteurs des données représentatives de la température de l'eau à l'entrée de la chaudière, de la température de l'eau à la sortie de la chaudière et de la température extérieure et à calculer la puissance que doit fournir la chaudière et à commander la hauteur du lit de combustible solide, la vitesse de la grille (12) et la quantité d'air secondaire, le dispositif de calcul étant aussi destiné à recevoir des données représentatives de la température et du débit des fumées prélevées et à réguler la quantité de fumées recyclées par le second dispositif de circulation (36) et la quantité d'air primaire déplacée par le premier dispositif de circulation (20).

## Patentansprüche

1. Steuerungsverfahren für einen mit festem Brennstoff beschickten Kessel mit Rostfeuerung und beweglichem Rost, wobei das Steuerungsverfahren zur Reduzierung des Gehalts der in den Rauchgasemissionen enthaltenden Stickoxide NOₓ dient und die folgenden Verfahrensschritte umfaßt:
- Bestimmung der durch den Kessel zu liefernden Leistung sowie der zur Lieferung dieser Leistung benötigten Menge an zu verbrennenden festen Brennstoffen und gegebenenfalls Bestimmung einer Sekundärluft-Zuführmenge;
- Messung des stöchiometrischen Sauerstoffüberschusses in den Rauchgasen;
- Abzug eines Rauchgasstroms am Auslaß des Kessels; und
- Regelung der Primärluft-Strömungsmenge in Abhängigkeit der zu erbringenden Leistung und des gemessenen stöchiometrischen Sauerstoffüberschusses;
gekennzeichnet dadurch, daß
- das Verfahren die Bestimmung eines optimalen Rückflußverhältnisses umfaßt und
- die Mischung des abgezogenen Rauchgasstroms mit der Primärluft derart erfolgt, daß das Gemisch einen Primärluftstrom bildet, der eine dem optimalen Rückflußverhältnis entsprechende Menge an Rauchgasen enthält.

2. Verfahren nach Anspruch 1, dadurch gekennzeichnet, daß die Bestimmung des optimalen Rückflußverhältnisses eine Steuerung des Kessels mit verschiedenen Rückflußverhältnissen umfaßt, wobei der Wert ermittelt wird, bei dem der NOₓ-Gehalt am geringsten ist.

3. Verfahren nach Anspruch 1, dadurch gekennzeichnet, daß die Bestimmung des optimalen Rückflußverhältnisses durch Ablesen eines optimalen Rückflußverhältnisses aus Tabellen in Abhängigkeit vom Typ des verwendeten Kessels und der Art des festen Brennstoffs erfolgt.

4. Verfahren nach einem der Ansprüche 1 bis 3, dadurch gekennzeichnet, daß beim Rauchgasabzug die Abzugsmenge durch Messung der Temperatur und der Durchflußmenge des abgezogenen Rauchgasstroms ermittelt wird und die Regelung der Abzugsmenge in Abhängigkeit des optimalen Rückflußverhältnisses erfolgt.

5. Verfahren nach einem der Ansprüche 1 bis 4, dadurch gekennzeichnet, daß die Mischung des Rauchgasstroms mit der Primärluft stromaufwärts zu einer den Primärluftstrom in den Kessel einbringenden Zirkulationsvorrichtung (20) erfolgt.

6. Kessel mit beweglichem Rost und Rostfeuerung zur Verbrennung von festen Brennstoffen, enthaltend
- einen Kesselkörper (10),
- einen beweglichen Rost (12) zur Bewegung eines Bettes aus festen Brennstoffen zwischen einer Aufgabestelle für die festen Brennstoffe und einem Auslaß für Verbrennungsrückstände,
- eine erste Zirkulationsvorrichtung (20) zur Zuführung eines Primärluftstroms unterhalb des beweglichen Rostes,
- eine Vorrichtung (22, 24) zur Zuführung eines Sekundärluftstroms,
- eine erste Regelvorrichtung zur Veränderung der Primärluftstrommenge in Abhängigkeit der vom Kessel zu erbringenden Leistung und des stöchiometrischen Sauerstoffüberschusses in den Rauchgasen,
- eine Vorrichtung (34, 36) zum Abzug eines Rauchgasstroms und
- eine Vorrichtung (20) zum Untermischen des dem Primärluftstrom zugeführten Rauchgasstroms,
dadurch gekennzeichnet, daß
- der Kessel eine zweite Regelvorrichtung zur Veränderung der Rauchgasstrommenge in Abhängigkeit der Primärluftstrommenge enthält, um so ein optimales Verhältnis zur Rückführung der Rauchgase in den Primärluftstrom zu ermitteln, und
- der mit dem Primärluftstrom zu vermischende Rauchgasstrom stromaufwärts von der ersten Zirkulationsvorrichtung (20) zugeführt wird.

7. Kessel nach Anspruch 6, dadurch gekennzeichnet, daß die zweite Regelvorrichtung die Rauchgasmenge durch Messung der Temperatur und der Durchflußmenge der Rauchgase bestimmt.

8. Kessel nach einem der Ansprüche 6 und 7, dadurch gekennzeichnet, daß die Mischvorrichtung durch die erste Zirkulationsvorrichtung (20) gebildet wird.

9. Kessel nach einem der Ansprüche 6 bis 8, dadurch gekennzeichnet, daß die Abzugsvorrichtung eine zweite Zirkulationsvorrichtung (36) umfaßt, die durch die zweite Regelvorrichtung geregelt wird.

10. Kessel nach einem der Ansprüche 6 bis 9, dadurch gekennzeichnet, daß der Kessel unter anderem eine Rechenvorrichtung enthält, welche Meßeinheiten zur Ermittlung von Daten über die Wassertemperatur beim Eintritt in den Kessel bzw. beim Verlassen des Kessels sowie der Außentemperatur umfaßt, die vom Kessel zu erbringende Leistung berechnet und die Höhe des Bettes aus festen Brennstoffen, die Geschwindigkeit des Rostes (12) und die Sekundärluftmenge festlegt, wobei die Rechenvorrichtung zudem auch Daten über die Temperatur und die Durchflußmenge der abgezogenen Rauchgase empfängt und zur Regelung der Menge der von der zweiten Zirkulationsvorrichtung (36) zurückgeführten Rauchgase sowie der durch die erste Zirkulationsvorrichtung (20) bewegten Primärluftmenge dient.

## Claims

1. A method of running a boiler having a bed of solid fuel and a moving grid, the method being intended to reduce the nitrogen oxide NOₓ content of the flue gases, and being of the type which comprises:
determining the power to be delivered by the boiler and, as a function of said power to be delivered, determining the quantity of solid fuel to be burnt, and possibly determining a rate at which secondary air should be injected;
measuring the stoichiometric excess of oxygen in the flue gases;
extracting a stream of flue gases from the outlet of the boiler; and
regulating the flow rate of a stream of primary air as a function of the power to be delivered and of the measured stoichiometric excess of oxygen;
the method being characterized in that it comprises:
determining an optimum recycling rate; and in that
mixing the extracted stream of flue gases with the primary air in such a manner that the mixture forms a stream of primary air containing a quantity of flue gases corresponding to the optimum recycling rate.

2. A method according to claim 1, characterized in that determining the optimum recycling rate comprises running the boiler at different recycling rates to determine the value which gives the lowest NOₓ content.

3. A method according to claim 1, characterized in that the optimum recycling rate is determined by reading an optimum recycling rate from tables as a function of the type of boiler used and the nature of the solid fuel.

4. A method according to any one of claims 1 to 3, characterized in that the flue gases are extracted while determining the quantity extracted by measuring the temperature and the flow rate of the stream of extracted flue gases, and regulating the quantity extracted as a function of the optimum recycling rate.

5. A method according to any one of claims 1 to 4, characterized in that the stream of flue gases and the primary air are mixed together upstream from a circulator device (20) which injects the stream of primary air into the boiler.

6. A boiler having a bedded layer of solid fuel and a moving grid, the boiler being of the type which comprises:
a boiler body (10);
a moving grid (12) for moving a bed of solid fuel between a solid fuel inlet and an ash outlet;
a first circulator device (20) for injecting a stream of primary air beneath the moving grid;
a device (22, 24) for injecting secondary air; and
a first regulator device for varying the quantity of the primary air stream as a function of the power demanded of the boiler and of the stoichiometric excess of oxygen in the flue gases;
a device (34, 36) for extracting a stream of flue gases; and
a device (20) for mixing the stream of flue gases injected into the stream of primary air;
the boiler being characterized in that it comprises:
a second regulator device for varying the quantity of the stream of flue gases as a function of the quantity of the stream of primary air so as to obtain a determined optimum rate for recycling flue gases in the primary air; and in that
the stream of flue gases for mixing with the stream of primary air is injected upstream from the first circulator device (20).

7. A boiler according to claim 6, characterized in that the second regulator device determines the quantity of flue gases by measuring the temperature and the flow rate of the flue gases.

8. A boiler according to claim 6 or 7, characterized in that the mixer device is constituted by the first circulator device (20).

9. A boiler according to any one of claims 6 to 8, characterized in that the device for extracting flue gases comprises a second circulator device (36) controlled by the second regulator device.

10. A boiler according to any one of claims 6 to 9, characterized in that it further comprises a calculator device of the type designed to receive from sensors data representative of the water temperature at the inlet to the boiler, the water temperature at the outlet from the boiler, and the outside temperature, to calculate the power which the boiler is to deliver, and to control the depth of the solid fuel bed, the speed of the grid (12), and the quantity of secondary air, the calculator device also being designed to receive data representative of the temperature and of the flow rate of the extracted flue gases and to regulate the quantity of the flue gases recycled by the second circulator device (36) and the quantity of primary air moved by the first circulator device (20).
